# EUROPÄISCHE PATENTSCHRIFT

(11) **EP 2 217 862 B1**
(45) Veröffentlichungstag und Bekanntmachung des Hinweises auf die Patenterteilung: **05.02.2020**
(21) Anmeldenummer: 08856129.5
(22) Anmeldetag: 04.12.2008
(51) Int. Cl.: F24F 12/00, F24F 5/00, F24F 11/83

(54) **Kreislaufverbundsystem und Verfahren zum Betrieb eines Kreislaufverbundsystems**
Heat recovery system and method of operating a heat recovery system
Système de récupération de chaleur et méthode d'opérer un système de récupération de chaleur

(30) Priorität: 07.12.2007 DE 102007059332; 18.12.2007 DE 102007061617; 19.02.2008 DE 102008009860; 09.07.2008 DE 102008032201
(43) Veröffentlichungstag der Anmeldung: 18.08.2010
(73) Patentinhaber: Hombücher, Heinz-Dieter, 63179 Obertshausen (DE)
(72) Erfinder: Hombücher, Heinz-Dieter, 63179 Obertshausen (DE)
(74) Vertreter: Stahl, Dietmar
(86) Internationale Anmeldenummer: PCT/DE2008/002032
(87) Internationale Veröffentlichungsnummer: WO 2009/071074

(56) Entgegenhaltungen:
- WO-A-96/39603
- DE-A1- 10 058 273
- DE-A1- 10 323 287
- DE-A1-102005 008 565

## Beschreibung

Die Erfindung betrifft ein Kreislaufverbundsystem nach Anspruch 1 oder 3 und ein Verfahren zum Betrieb eines Kreislaufverbundsystems nach Anspruch 6.

Eine Vorrichtung zur mehrstufigen Wärmerückgewinnung mit Steuerung der Heiz- und Kühlleistung einer Lüftungsanlage kann eine spezielle Einheit enthalten, die eine Wärmepumpe mit Hydraulikmodul und eine Einrichtung zur Energiepufferung sowie einen nachgeschalteten Wärmeaustauscher, z.B. Lamellenwärmeaustauscher, aufweist. Weiterhin ist ein Verbundsystem mit integrierter Wärmepumpe für mehrere Lüftungsanlagen mit Kreislaufverbundsystemen zur mehrstufigen Wärmerückgewinnung und Kälte-Wärme-Verschiebung innerhalb eines Verbundsystems für Lüftungsanlagen vorgesehen.

Wärmepumpen und Kreislaufverbundsysteme werden in der Lüftungstechnik zur Wärmerückgewinnung eingesetzt. Hierbei kann kalte Außenluft als Zuluft durch gezielten Wärmetransport aus der warmen Abluft vorgeheizt und ggf. auch getrocknet werden. Weiterhin kann warme Außenluft als Zuluft durch Wärmeübertragung an die Abluft gekühlt werden. Dabei wird häufig ein Wärmeträger (Wasser, Sole usw.) zur Übertragung der Energie eingesetzt.

Weiterhin sind auch Kreislaufverbundsysteme mit darin integrierten Wärmepumpen bekannt. Beispielhaft sind solche Systeme in der DE 44 08 087 C2 und dem Buch: Wärme- und Kälterückgewinnung in raumlufttechnischen Anlagen; 5., überarbeitete Auflage 2001; ISBN 3-8041-2233-7 beschrieben. Mit einer derartigen Kombination aus Kreislaufverbundsystem und Wärmepumpe lässt sich der Wirkungsgrad der Wärmerückgewinnung steigern.

Ebenfalls werden Wärmepumpen zur Verbindung mehrerer Lüftungsgeräte mit unterschiedlichen Luftvolumenströmen und Lufttemperaturen eingesetzt, wie dies in der WO 2005/072560 A1 beschrieben ist.

In den herkömmlichen Systemen zur Wärmerückgewinnung wird beim Einschalten der Wärmepumpe der Wärmeträger auf Grund des Ein- und Ausschaltens der Verdichter ungleichmäßig erwärmt bzw. gekühlt, was zu ungleichmäßigen Zulufttemperaturen in damit entsprechend verbundenen Lüftungsanlagen führt. Für alternative Prozesse werden geregelte Verdichter eingesetzt bzw. Vorkehrungen getroffen, um den Kältekreis zu regeln. Dies alles führt jedoch zur Verschlechterung des Wirkungsgrades und bei Unterschreiten der Mindestkälteleistung eines Verdichters zu Temperatursprüngen im Wärmeträger, weil der Verdichter abgeschaltet werden muss. Auch ist es im Kühlfall nicht immer möglich die von den Verdichtern in den Wärmeträger eingebrachte Energie an die Fortluft zu übertragen ohne die zulässige Verflüssigungstemperatur zu überschreiten. Wenn der Fortluftwärmeaustauscher vereist und eine Abtauschaltung vorgenommen werden muss, z.B. mittels Umkehrung des Kältekreises oder durch eine Bypassschaltung, kann der kalte Wärmeträger nicht eingelagert werden und der Zuluftwärmeaustauscher nicht mit ausreichend warmem Wärmeträger ununterbrochen versorgt werden.

Gemäß der Vorrichtung in DE 44 08 087 C2 wird ein Teilstrom des Wärmeträgers aus einem Wärmeaustauscher ausgekoppelt, damit der Wärmeträger für eine thermodynamische Behandlung erneut in den Vorlauf des Wärmeaustauschers eingespeist werden kann.
Bei diesem bekannten System werden die Volumenströme des Wärmeträgers beim Einsatz innerhalb des Wärmeaustauschers getrennt. Damit ergibt sich eine ungleichmäßige Beaufschlagung verschiedener Bereiche des Wärmeaustauschers und als Folge davon stellt sich eine schlechtere Wärmeübertragung ein. Für die optimale Auskopplung im Teillastbetrieb müsste vielmehr entsprechend der jeweils gewünschten Leistungsaufteilung die Position der Austrittsstelle im Bezug auf die Länge des Wärmeaustauschers variabel gestaltet werden. Weiterhin ist in diesem System keine Speichereinrichtung für den von der Wärmepumpe direkt mit dem Verflüssiger oder Verdampfer eingebrachten Energieüberschuss vorhanden, um innerhalb des Kreislaufverbundsystems die Energie gezielt einlagern und bedarfsgerecht wieder entnehmen zu können.

Mit den Lösungen nach dem beschriebenen Stand der Technik ist folglich eine konstante Temperatur des Wärmeträgers am Zuluftwärmeaustauscher nicht erreichbar, um eine konstanten Zulufttemperatur bei Kreislaufverbundsystemen einstellen zu können. Dies gilt auch für Kreislaufverbundsysteme mit integrierter Wärmepumpe, in welcher der Verdampfer und der Verflüssiger mit dem Wärmeträger des Kreislaufverbundsystems direkt durchströmt werden, und dies wiederum insbesondere dann, wenn diese im Teillastbetrieb gefahren werden. Ein optimaler Wärmeaustausch zwischen Wärmeträger und Luft über die gesamte Wärmeaustauscherfläche ist auf Grund der unterschiedlichen Massenströme und Temperaturen des Wärmeträgers nicht möglich.
Eine dreistufige Wärmerückgewinnung ist in dem geschilderten Zusammenhang bislang nicht bekannt geworden.

Aus DE 103 23 287 A1 ist ein Verfahren und eine Vorrichtung zur Energierückgewinnung bekannt. In der Vorrichtung ist zwischen Abluft- und Zuluftvolumenstrom ein eigenständiges Wärmerückgewinnungssystem mit zwei Wärmeaustauschern vorgesehen. Darauffolgend ist ein weiteres System, bestehend aus einer Wärmepumpe, mehreren Wärmetauschern, einem Speicherkreislauf, einem Energiespeicher und einem Mischventil. So wird einem aus einem klimatisierten Raum kommenden Abluftvolumenstrom weitere Wärmeenergie entzogen und der Zuluftvolumenstrom wird im Heizfall mittels der Wärmepumpe mittels Wärmeenergie aus dem Abluftvolumenstrom zusätzlich erwärmt.

Aus der DE 100 58 273 A1 ist eine Vorrichtung zur Lüftung von Gebäuden bekannt. Die Vorrichtung ist mit einem Wärmetauscher sowie einer Wärmepumpeneinheit zur Wärmerückgewinnung der in der Abluft vorhandenen Wärme versehen. Dies erfolgt auch dann, wenn eine Zulufterwärmung nicht erwünscht ist. Hierzu wird ein zusätzlicher Brauchwasserspeicher vorgesehen, der mittels der Wärmepumpeneinheit heizbar ist. Dies erfolgt indem ein Wasserheizelement im Brauchwasserspeicher über eine Vorlaufleitung mit Heizgas aus dem Wärmepumpenkreislauf gespeist wird. Über einen Rücklauf wird das abgekühlte Heizgas zur Wärmepumpeneinheit zurückgeführt.

Aufgabe der Erfindung ist es daher, in einem Kreislaufverbundsystem und einem Verfahren zum Betrieb eines Kreislaufverbundsystems, die genannten Nachteile zu vermeiden und die Ausbeute der Wärmerückgewinnung bei guter Regelbarkeit der Zulufttemperatur bedeutend zu steigern, wobei der Wärmeträger direkt mit dem Verflüssiger und Verdampfer thermodynamisch zu behandeln, überschüssige Energie an andere Verbraucher abzugeben, sowie den Energieeinsatz und den Aufwand für die hydraulischen Einrichtungen zu senken.

Die Lösung dieser Aufgabe gestaltet sich in einer Vorrichtung nach Anspruch 1 oder Anspruch 3 und einem Verfahren nach Anspruch 6.

Vorteilhafte Weiterbildungen ergeben sich aus den Unteransprüchen.

Die Erfindung nach Patentanspruch 1 basiert auf einer Wärmeaustauscheranlage als Kreislaufverbundsystem mit integrierter Wärmepumpe und integriertem Pufferspeicher mit einem Regelventil. Der Pufferspeicher kann dabei vorzugsweise als Schichtenspeicher ausgebildet, in welchem überschüssige Energie gezielt eingelagert und entnommen werden kann. Hinzu kommen ein oder mehrere nachgeschaltete Wärmeaustauscher, z.B. Lamellenwärmeaustauscher, die in das Kreislaufverbundsystem integriert werden.

Durch den Anschluss von mehreren Lüftungsanlagen an ein einziges Kreislaufverbundsystem mit integrierter Wärmepumpe gelingt es weiterhin die Energie von einem zum anderen Lüftungssystem zu verschieben.

Eine wirtschaftliche Lösung beim Einsatz von mehreren Lüftungsanlagen mit Kreislaufverbundsystem wird erreicht, wenn auch die Kälte-Wärme-Verschiebung von mehreren Lüftungsgeräten mit dem Verbundsystem mit integrierter Wärmepumpe eingesetzt wird. In diesem Fall wird die Energie, die einem Lüftungsgerät entzogen wird (die Zuluft im Lüftungsgerät wird gekühlt) einem anderen Lüftungsgerät zugeführt (die Zuluft im anderen Lüftungsgerät wird erwärmt). Der Verdichter verbraucht in diesem Fall nur einmal Strom, aber der Energieeinsatz hat dabei einen zweifachen Nutzen. In diesem Fall Können auch Lüftungsgeräte eingebunden werden, die ein anderes regeneratives oder rekuperatives Wärmerückgewinnungssystem als erste Stufe der Wärmerückgewinnung haben, als ein Kreislaufverbundsystem.

Beim Betrieb der vorgeschlagenen Anlage können dann im Folgenden aufgeführte Betriebsarten gewählt werden, um mit kleinstem Aufwand die gewünschte Zulufttemperatur zu erreichen:
1. Betrieb nur im Umfang der ersten Stufe
2. Betrieb der ersten Stufe und des Kreislaufverbundsystems (ohne Wärmepumpe WP)
3. Betrieb der ersten Stufe mit dem Kreislaufverbundsystem und der Wärmepumpe WP
4. Ergänzung der Energiezuführung mittels Fremdenergie aus einem externen Heizungssystems im Heizfall, z.B. mit PWT PWW.
5. Ergänzung des Energieentzugs der Zuluft mittels Fremdenergie aus einem externen Kälteerzeuger im Kühlfall
6. Ergänzung der Energiezuführung mittels Geothermie im Heizfall, z.B. PWT GeoW.
7. Ergänzung des Energieentzugs mittels Geothermie im Kühlfall, z.B. PWT GeoS.
8. Abgabe von Energie im Heiz- oder Kühlfall an externe Nutzer über Pumpenwarmwasser PWW oder Pumpenkaltwasser PKW.
9. Kälte-Wärme-Verschiebung von einem Lüftungsgerät zu einem anderen Lüftungsgerät
10. Kälte-Wärme-Verschiebung innerhalb eines Lüftungsgerätes für einen Nacherhitzer z.B. bei der Feuchteregelung im Kühlfall

Durch das erfindungsgemäße Zusammenwirken der Vorrichtungsbestandteile ist es möglich, die Zulufttemperatur konstant zu halten oder entsprechend einer Vorgabe bei maximaler Energieausbeute und minimalem Einsatz von Primärenergie nachzuregeln. Im Sinne der VDI 2071 wird eine Wärmerückgewinnung bis 100% erzielt, dabei kann das Temperaturniveau der Abluft höher oder niedriger als das Temperaturniveau der Zuluft sein.

In allen beschriebenen Beispielen sind Pufferspeicher vorgesehen. Diese können in einer Wärmepumpeneinheit integriert, als separater Speicher in einem der Kreisläufe der Wärmepumpen angeordnet, von unterschiedlicher Größe oder durch einen Teilkreislauf einer Wärmepumpe ersetzt sein. Insbesondere sind die Pufferspeicher aber jeweils einem Kreislaufverbundsystem zugeordnet, um die dort gewonnene Wärmeenergie zwischenspeichern zu können bzw. wieder zur Wärmeübertragung dorthin zurückführen zu können.

Die Erfindung wird anhand von Zeichnungen näher erläutert. Dabei zeigen:

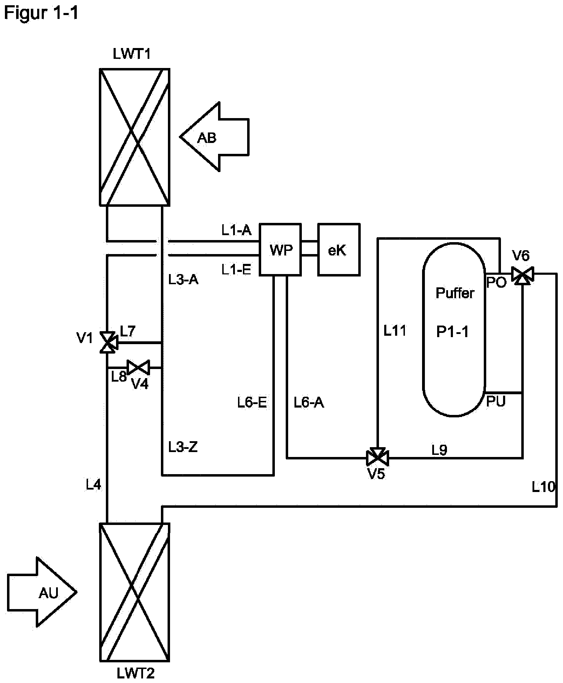

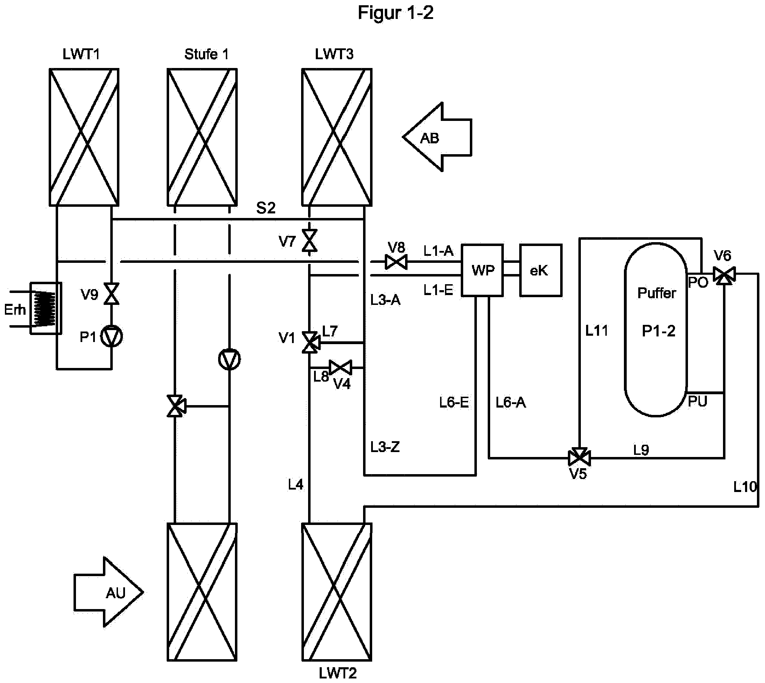

- Figur 1-1: Einbindung eines Pufferspeichers in ein Kreislaufverbundsystem,
- Figur 1-2: zweistufige Wärmerückgewinnung mit einem regenerativen oder rekuperativen Wärmerückgewinnungssystem als erster Stufe,
- Figur 2-2: eine Schaltung zur Steigerung der Wärmerückgewinnung, wobei der Speicher aus der Wärmepumpe WP ausgelagert und als Schichtenspeicher ausgebildet ist,

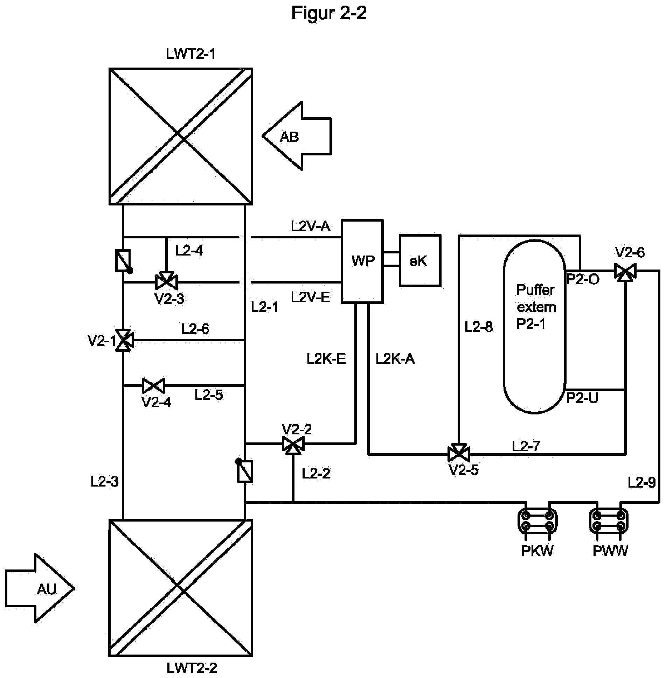

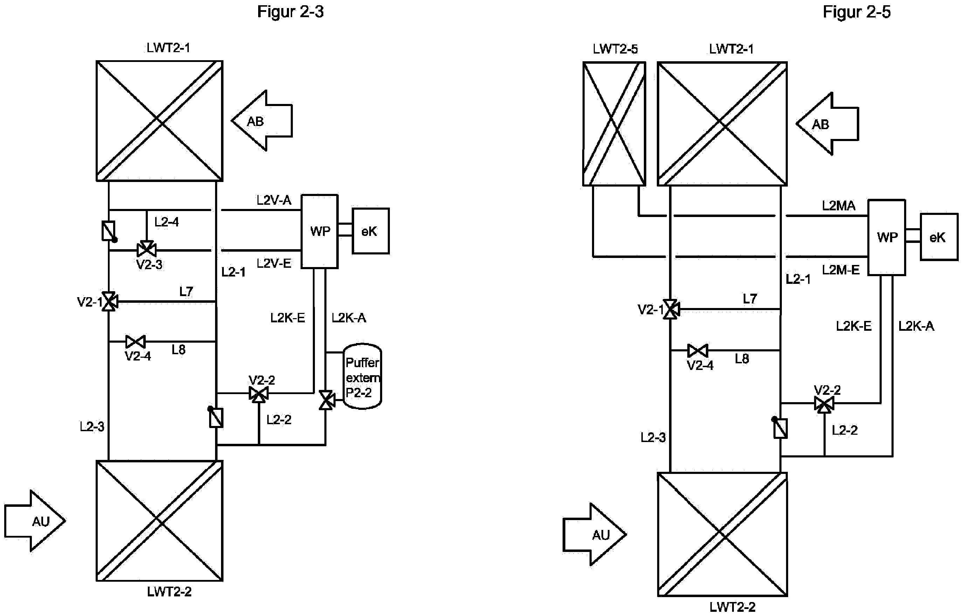

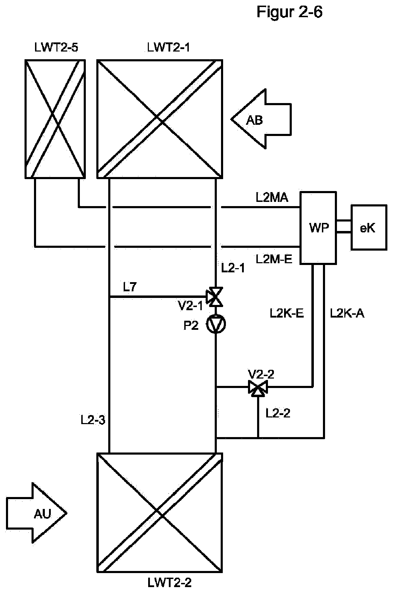

- Figur 2-3: zweite Schaltung zur Steigerung der Wärmerückgewinnung gemäß Figur 2-2,
- Figur 2-5: dritte Schaltung zur Steigerung der Wärmerückgewinnung mit Übertragung der Energie der Wärmepumpe an den Abluftvolumenstrom,
- Figur 2-6: vierte Schaltung zur Steigerung der Wärmerückgewinnung gemäß Figur 2-5, und

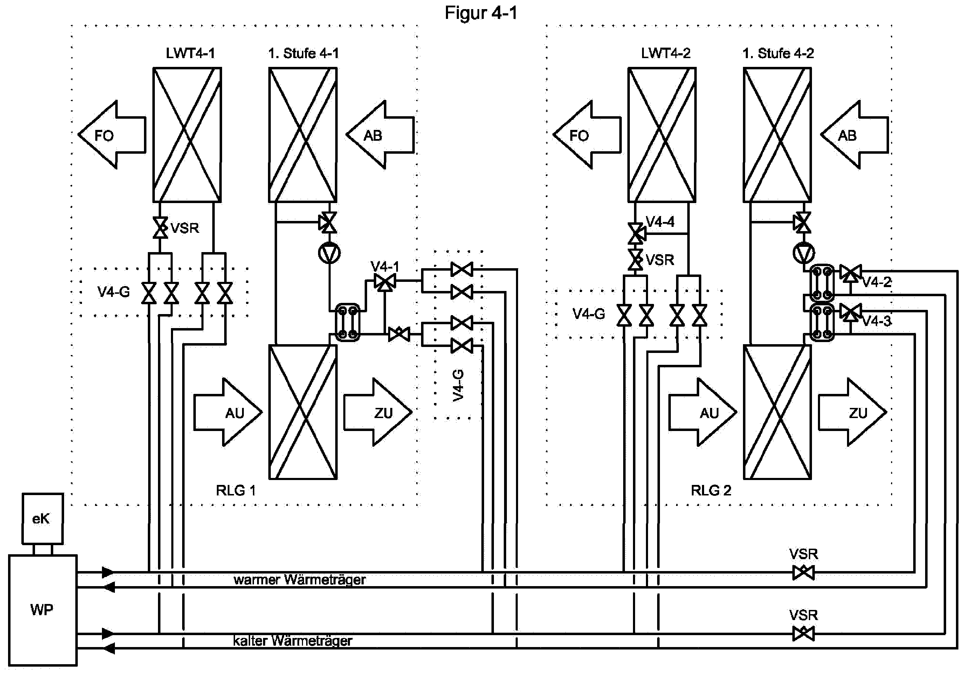

- Figur 4-1: eine Ausführungsform zum Einsatz einer Wärmepumpe für mehrere Raumluftgeräte.

In einer ersten erfinderischen Ausführungsform wird eine Schaltung gemäß Figur 1-1 gewählt. Der Hydraulikkreis ist so geschaltet, dass bei ausgeschaltetem Verdichter der Wärmepumpe WP der Hydraulikkreis ein Kreislaufverbundsystem bildet.

In Figur 1-1 ist die prinzipielle Einbindung eines Pufferspeichers P1-1 in ein Kreislaufverbundsystem dargestellt. Der Pufferspeicher kann dabei als so genannter Schichtenspeicher aufgebaut sein, in den Wärmeenergie schichtförmige eingebracht oder entnommen werden kann. Dazu dient die entsprechende Verschaltung über eine obere zwölfte Leitung PU und eine untere zwölfte Leitung PO und ein zweites Dreiwege-Ventil V6. Weiterhin ist die Wärmepumpe WP dem Pufferspeicher zugeordnet, um diesem die Wärmeenergie zuführen.

### Betriebsart 1:

### Darstellung in Figur 1-1 bei ausgeschaltetem Verdichter ohne Einsatz der Wärmepumpe WP

Der Wärmeträger wird von einer Pumpe (z.B. Förderpumpe der Wärmepumpe WP) im Hydraulikkreis gefördert und durchströmt die Rohrleitungen und Ventile des Systems in folgender Reihenfolge: über eine erste Leitung L6-A, ein erstes Dreiwege-Ventil V5, eine zweite Leitung L9, ein zweites Dreiwege-Ventil V6, eine dritte Leitung L10, einen ersten Wärmeaustauscher LWT2, eine vierte Leitung L4, ein drittes Dreiwege-Ventil V1, eine fünfte Leitung L1-E, die Wärmepumpe WP, eine sechste Leitung L1-A, einen zweiten Wärmeaustauscher LWT1, eine obere siebte Leitung L3-A, eine untere siebte Leitung L3-Z und über eine achte Leitung L6-E wieder zurück in die Wärmepumpe WP.

Dabei werden der Verflüssiger und der Verdampfer der Wärmepumpe WP durchströmt, aber dabei wird innerhalb der ausgeschalteten Wärmepumpe WP keine Energie entnommen oder zugeführt. Die in der Wärmepumpe WP enthaltene Förderpumpe wird als Umwälzpumpe des Hydraulikkreises benutzt.

### Betriebsart 2:

### Darstellung in Figur 1-1 bei eingeschaltetem Verdichter und leerem Pufferspeicher P1-1:

Beim Einschalten der Wärmepumpe WP durchströmt im Heizfall der den Verdampfer durchströmende Wärmeträger die Rohrleitungen und Ventile wie folgt: die sechste Leitung L1-A, den zweiten Wärmeaustauscher LWT1, die obere siebte Leitung L3-A, die neunte Leitung L7, das dritte Dreiwege-Ventil V1 und über die fünfte Leitung L1-E wieder in die Wärmepumpe WP. Der den Verflüssiger der Wärmepumpe WP durchströmende Wärmeträger durchströmt anschließend die erste Leitung L6-A, das erste Dreiwege-Ventil V5, die zweite Leitung L9, das zweite Dreiwege-Ventil V6, die dritte Leitung L10, den ersten Wärmeaustauscher LWT2, die vierte Leitung L4, die zehnte Leitung L8, ein Ventil V4, die untere siebte Leitung L3-Z und über die achte Leitung L6-E wieder in die Wärmepumpe WP. Eventuell von der Wärmepumpe WP zuviel eingebrachte Energie wird mit den Wärmeträger über das erste Dreiwege-Ventil V5 und eine elfte Leitung L11 in den Pufferspeicher P1-1 transportiert und verdrängt den im Pufferspeicher P1-1 eingelagerten kalten Wärmeträger, der den Pufferspeicher P1-1 über die untere zwölfte Leitung PU verlässt und über die zweite Leitung L9 zum zweiten Dreiwege-Ventil V6 strömt. Mit dem zweiten Dreiwege-Ventil 6 wird zur Erreichung der gewünschten Zulufttemperatur die erforderliche Wärmeträgertemperatur eingestellt.

### Betriebsart 3:

### Darstellung in Figur 1-1 bei ausgeschaltetem Verdichter und vollem Pufferspeicher P1-1:

Die Verdichter der Wärmepumpe WP werden, wenn der Pufferspeicher P1-1 mit warmem Wärmeträger gefüllt ist, ausgeschaltet. Die Hydraulik wird wie unter Betriebsart 1 beschrieben geschaltet. Mit dem zweiten Dreiwege-Ventil V6 wird über die obere zwölfte Leitung PO so viel warmer Wärmeträger dem Pufferspeicher P1-1 entnommen wie zum Erreichen der gewünschten Temperatur in der dritten Leitung L10 erforderlich ist. Über die untere zwölfte Leitung PU wird dem Pufferspeicher P1-1 die gleiche Menge kalter Wärmeträger zugeführt wie über die obere zwölfte Leitung PO entnommen wird. Dabei wird auch bei ausgeschalteten Verdichtern mit dem zweiten Wärmeaustauscher LWT1 der Abluft Energie entzogen.

Eine Steigerung der Wärmerückgewinnung wird bei der Ausbildung des Systems als zweistufige Wärmerückgewinnung mit einem regenerativen oder rekuperativen Wärmerückgewinnungssystem als erster Stufe erreicht. Die entsprechende Vorrichtung ist in Figur 1-2 dargestellt.

### Betriebsart 4:

### Darstellung nach Figur 1-2 bei eingeschaltetem Verdichter als weiterbildende Ausführungsform:

In dem hier dargestellten System ist als erste Stufe für die Wärmerückgewinnung ein Kreislaufverbundsystem, bezeichnet mit Stufe 1, zwischen dem Zuluftkanal und dem Abluftkanal vorgesehen. Die Stufe 1 der Wärmerückgewinnung entzieht der Abluft Energie und überträgt diese an die Zuluft. Die zweite Stufe der Wärmerückgewinnung ist wie folgt geschaltet: Vom Verdampfer der Wärmepumpe WP aus durchströmt der Wärmeträger die sechste Leitung L1-A, ein Ventil V8, den zweiten Wärmeaustauscher LWT1, eine Leitung S2, die obere siebte Leitung L3-A und die neunte Leitung L7; das dritte Dreiwege-Ventil V1 und die fünfte Leitung L1-E. Vom Verflüssiger der Wärmepumpe WP aus durchströmt der Wärmeträger die erste Leitung L6-A, das erste Dreiwege-Ventil V5, die zweite Leitung L9, das zweite Dreiwege-Ventil V6, die dritte Leitung L10, den ersten Wärmeaustauscher LWT2, die vierte Leitung L4, die zehnte Leitung L8, ein Ventil V4, die untere siebte Leitung L3-Z und anschließend die achte Leitung L6-E. Dabei kann überschüssige Energie wieder in den Pufferspeicher P1-2 eingelagert werden. Der Wärmeaustauscher LWT3 wird hier nicht durchströmt.

### Betriebsart 5:

### Darstellung in Figur 1-2 bei ausgeschaltetem Verdichter der Wärmepumpe WP

Wenn der/die Verdichter der Wärmepumpe WP ausgeschaltet sind wird ein Kreislaufverbundsystem ausgebildet. Der Wärmeträger durchströmt die Strecke über das dritte Dreiwege-Ventil V1, ein Ventil V7, einen Wärmeaustauscher LWT3, die obere siebte Leitung L3A, die untere siebte Leitung L3-Z, die achte Leitung L6-E, die erste Leitung L6-A, das erste Dreiwege-Ventil V5 und das zweite Dreiwege-Ventil V6, die dritte Leitung L10, den erster Wärmeaustauscher LWT2, die vierte Leitung L4 und wieder das dritte Dreiwege-Ventil V1. Bei Bedarf kann aus dem gefüllten Pufferspeicher P1-2 wieder Energie beigemischt werden.

Kommt es eventuell zu Eisansatz im zweiten Wärmeaustauscher LWT1 wird Ventil V8 geschlossen und Ventil V9 geöffnet. Anschließend fördert Umwälzpumpe P1 im kleinen Kreislauf den Wärmeträger durch den zweiten Wärmeaustauscher LWT1, der mit dem Elektroheizregister Erh auf Temperaturen oberhalb 0°C erwärmt wird.

Die Erfindung bezieht sich auch auf ein Verfahren zum Betrieb einer Wärmerückgewinnungsanlage mit dem Aufbau eines Kreislaufverbundsystems mit integrierter Wärmepumpe, in dem der Volumenstrom des Wärmeträgers in der zu dem einen Wärmeaustauscher führenden Leitung in mindestens zwei Volumenströme aufgeteilt wird. Auf diese Weise wird erreicht, dass der Wärmeaustauscher (Verdampfer) der Wärmepumpe WP mit einem größeren oder kleineren Volumenstrom als der Wärmeaustauscher in dem Zuluftvolumenstrom durchströmt werden kann. So kann eine möglichst große Temperaturdifferenz in den Wärmeaustauschern des Kreislaufverbundssystems und eine möglichst kleine Temperaturdifferenz in den Wärmeaustauschern der Wärmepumpe eingestellt werden. Die erste Auswirkung ergibt einen äußerst effektiven Wärmeübergang im Kreislaufverbundsystem. Die letztere Auswirkung hat sehr positive Auswirkungen auf die Betriebsweise der Wärmepumpe und deren Verdichter.

Vorteilhaft ist auch ein Verfahren zum Betrieb eines Kreislaufverbundsystems mit integrierter Wärmepumpe WP, in dem ein Teilstrom des Wärmeträgers zwischen dem Abluft- LWT2-1 und Zuluftwärmeaustauscher LWT2-2 ausgekoppelt wird. Der ausgekoppelte Teilstrom wird danach thermodynamisch behandelt, indem ihm Wärmeenergie hinzugefügt oder entzogen wird. Vor dem Eintritt in den Zuluftwärmeaustauscher LWT2-2 wird der ausgekoppelte und nun veränderte Teilstrom des Wärmeträgers wieder mit dem zuvor verbliebenen anderen Teilstrom vereinigt. Durch Mischung der beiden unterschiedlich warmen Teilströme kann die Wärmeträgertemperatur vor Eintritt in den Zuluftwärmeaustauscher LWT2-2 genau auf die zur Erreichung der Zulufttemperatur erforderliche Wärmeträgertemperatur gemischt werden. Der für die thermodynamische Behandlung entnommene Teilstrom wird im Heizfall mit einer in der Wärmepumpe WP integrierten Umwälzpumpe durch den Verflüssiger geleitet, im Kühlfall durch den Verdampfer. Auf diese Weise wird erreicht, dass der Wärmeaustauscher (z.B. Verdampfer oder Verflüssiger) der Wärmepumpe mit einem größeren oder kleineren Volumenstrom als der des (Lamellen-) Wärmeaustauscher in der Zuluft durchströmt werden kann. So kann also die größtmögliche Temperaturdifferenz in den Wärmeaustauschern des Kreislaufverbundssystems und die kleinstmögliche Temperaturdifferenz in den Wärmeaustauschern der Wärmepumpe WP eingestellt werden. Damit stellen sich der sehr effektive Wärmeübergang im Kreislaufverbundsystem und eine deutlich verbesserte Betriebsweise der Wärmepumpe WP und deren Verdichter ein. Wichtig ist, dass zur Pufferung einer von dem Verdichter möglicherweise als Überschuss in das System eingebrachten Energiemenge ein Speicherbehälter in dem System angeordnet ist.

Eine zusätzliche Steigerung der Wärmerückgewinnung wird mit einer Schaltung gemäß Figuren 2-2, 2-3, 2-5 und 2-6 erreicht.

In Figur 2-2 ist als weiterbildende Ausführungsform der Speicher als Pufferspeicher P2-1 aus der Wärmepumpe WP ausgelagert und als Schichtenspeicher ausgebildet.

### Betriebsart 6:

### Darstellung in Figur 2-2 bei eingeschaltetem Verdichter der Wärmepumpe WP:

Eine Umwälzpumpe (Förderpumpe der Wärmepumpe WP) fördert den Wärmeträger durch den Verdampfer der eingeschalteten Wärmepumpe WP, der dabei abkühlt. Anschließend durchströmt der Wärmeträger eine sechste Leitung L2V-A. Ein Teilstrom wird über eine Leitung L2-4, ein Dreiwege-Ventil V2-3 und eine fünfte Leitung L2V-E wieder dem Verdampfer zugeführt, der restliche Volumenstrom tritt in eine vierte Leitung L2-3 ein, durchströmt einen zweiten Wärmeaustauscher LWT2-1 und strömt in eine siebte Leitung L2-1. Ein Teilstrom wird mit einer achten Leitung L2K-E aus der siebten Leitung L2-1 entnommen und strömt über ein viertes Dreiwege-Ventil V2-2 zum Verflüssiger der Wärmepumpe WP. Über eine erste Leitung L2K-A, ein erstes Dreiwege-Ventil V2-5, eine zweite Leitung L2-7, ein zweites Dreiwege-Ventil V2-6, eine dritte Leitung L2-9 strömt der Wärmeträger wieder in die siebte Leitung L2-1. Zuvor wird ein Teilstrom zur Volumenstromerhöhung über eine fünfzehnte Leitung L2-2, das vierte Dreiwege-Ventil V2-2 und die achte Leitung L2K-E wieder zum Verflüssiger geführt. Bei Überangebot von Energie wird der ein Anteil Wärmeträger im Pufferspeicher P2-1 eingelagert. Von der siebten Leitung L2-1 gelangt der Wärmeträger in den ersten Wärmeaustauscher LWT2-2, durchströmt eine vierte Leitung L2-3, ein drittes Dreiwege-Ventil V2-1 und wird dann aufgeteilt. Ein Teilstrom wird hierfür in einer fünften Leitung L2V-E angesaugt.

### Betriebsart 7:

### Darstellung in Figur 2-2 bei ausgeschaltetem Verdichter der Wärmepumpe WP:

Die Umwälzpumpe (Förderpumpe der Wärmepumpe WP) fördert den Wärmeträger durch den Verdampfer der Wärmepumpe WP. Anschließend durchströmt der Wärmeträger die sechste Leitung L2V-A, tritt in die vierte Leitung L2-3 ein, durchströmt den zweiten Wärmeaustauscher LWT2-1 und strömt in siebte Leitung L2-1. Ein Teilstrom wird mit der achten Leitung L2K-E aus der siebten Leitung L2-1 entnommen und strömt über das vierte Dreiwege-Ventil V2-2 zum Verflüssiger der Wärmepumpe WP. Über die erste Leitung L2K-A, das erste Dreiwege-Ventil V2-5, die zweite Leitung L2-7, das zweite Dreiwege-Ventil V2-6, die dritte Leitung L2-9 und den ersten Wärmetauscher LWT2-2 strömt der Wärmeträger wieder in die siebte Leitung L2-1. Ist der Wärmeträger nicht warm genug um die gewünschte Zulufttemperatur zu erreichen wird warmer Wärmeträger aus dem Pufferspeicher P2-1 beigemischt. Von der siebten Leitung L2-1 gelangt der Wärmeträger in den ersten Wärmeaustauscher LWT2-2, durchströmt die vierte Leitung L2-3, das dritte Dreiwege-Ventil V2-1 und tritt wieder in den zweiten Wärmeaustauscher LWT2-1 ein.

### Betriebsart 8:

Die Darstellung in Figur 2-3 zeigt eine weiterbildende Ausführungsform und entspricht der Figur 2-2 mit einer einfacheren Pufferung der Energie in einem Pufferspeicher P2-2 außerhalb des Wärmepumpenmoduls.

### Betriebsart 9:

### Darstellung in Figur 2-5 als zweite erfinderische Ausführungsform:

Der Wärmeträger durchströmt den ersten Wärmeaustauscher LWT2-2, anschließend die vierte Leitung L2-3, das dritte Dreiwege-Ventil V2-1, den zweiten Wärmeaustauscher LWT2-1, die siebte Leitung L2-1 und wieder zurück in den ersten Wärmeaustauscher LWT2-2. Mit der achten Leitung L2K-E wird ein Teilstrom aus der siebten Leitung L2-1 entnommen und über das vierte Dreiwege-Ventil V2-2 zum Verflüssiger im Heizfall, bzw. zum Verdampfer im Kühlfall, mit der im Hydraulikmodul der Wärmepumpe WP enthaltenen ersten Umwälzpumpe, durch den Pufferspeicher des Hydraulikmoduls gefördert und strömt über die erste Leitung L2K-A in siebte Leitung L2-1.

Zuvor wird wieder ein Teilstrom über die fünfzehnte Leitung L2-2 entnommen und über das vierte Dreiwege-Ventil V2-2 und die achte Leitung L2K-E dem Verflüssiger bzw. Verdampfer zugeführt. Zur Übertragung der Energie der Wärmepumpe WP an den Abluftvolumenstrom AB fördert die im Hydraulikmodul der Wärmepumpe WP enthaltene zweite Umwälzpumpe den Wärmeträger durch eine dreizehnte Leitung L2MA, einen dritten Wärmeaustauscher LWT2-5 und eine vierzehnte Leitung L2M-E zur Wärmepumpe WP zurück.

### Betriebsart 10:

### Darstellung Figur 2-6:

In dieser Darstellung entspricht die Vorrichtung der zuvor beschriebenen Betriebsart 15. Ergänzend ist jedoch hier eine Hauptumwälzpumpe P2 vorgesehen, die den Wärmeträger danach so fördert, dass dabei ein konstanter oder geregelter Durchfluss für den zweiten Wärmeaustauscher LWT2-1 und den ersten Wärmeaustauscher LWT2-2 als Lamellenwärmeaustauscher sichergestellt wird.

Eine weitere weiterbildende Ausführungsform ergibt sich in einer Darstellung nach Figur 4-1.

### Betriebsart 11:

### Darstellung in Figur 4-1 zur Wärmerückgewinnung:

In ein Kreislaufverbundsystem, das als 1. Stufe 4-1 bezeichnet ist, wird ein Wärmeaustauscher integriert, mit welchem man zusätzliche Energie von einer Wärmepumpe einbringen kann. Die Wärmepumpe WP entnimmt dem Fortluftstrom FO mit Lamellenwärmeaustauscher LWT4-1 oder/und LWT4-2 nach dem Kreislaufverbundsystem 1. Stufe 4-1 oder 1. Stufe 4-2 weitere Energie aus dem Fortluftstrom FO und führt diese Energie über den im Kreislaufverbundsystem 1. Stufe 4-1 oder 1. Stufe 4-2 integrierten Wärmeaustauscher der Zuluft ZU zu, in dem der Wärmeträger aus dem Kreislaufverbundsystem 1. Stufe 4-1 oder 1. Stufe 4-2 mit dem Wärmeaustauscher weiter erwärmt wird. Mit der Ventilgruppe V4-G wird der jeweils erforderliche Wärmeträger über den Wärmeaustauscher geleitet, dabei wird jeweils der Vorlauf und der Rücklauf des warmen oder des kalten Wärmeträgers geöffnet.

### Betriebsart 12:

### Darstellung in Figur 4-1 zur Kälte-Wärme-Verschiebung:

Das Dreiwegeventil im Kreislaufverbundsystem 1. Stufe 4-1 wird so gestellt, dass kein Wärmeträger durch den Abluftwärmeaustauscher strömen kann. Mit der Wärmepumpe WP wird über den in das Kreislaufverbundsystem 1. Stufe 4-1 eingebundenen Wärmeaustauscher dem Wärmeträger Energie entzogen und somit die Zuluft eines Raumluftgerätes RLG1 gekühlt. Die entnommene Energie wird über den Hydraulikkreis der Wärmepumpe WP dem Kreislaufverbundsystem 1. Stufe 4-2 der Zuluft für ein Raumluftgerät RLG2 zugeführt, indem der Wärmeträger vom Kreislaufverbundsystem 1.Stufe 4-2 mit dem integrierten Wärmeaustauscher weiter aufgewärmt wird erwärmt wird.

In Verbindung mit den in Figuren 1-1, 1-2, 2-2, 2-3, 2-5, 2-6 sowie 4-1 ist jeweils ein Rückkühler eK außerhalb der für die Luftbehandlung vorgesehenen Einheiten dargestellt. Mittels des Rückkühlers eK kann im Kühlfall die Menge an Energie an die Außenluft übertragen werden, welche mit den Wärmeaustauschern im Abluftvolumenstrom nicht oder nur zu einem ungünstigen Wirkungsgrad übertragen werden kann. Dabei ist es besonders vorteilhaft, wenn der Wärmeträger zuerst den Rückkühler eK außerhalb der Luftbehandlungseinheiten durchströmt, weil die zur Kühlung herangezogene Außenluft im allgemein wärmer ist als die Ablufttemperatur. Mit der Ablufttemperatur kann dann der Wärmeträger auf ein niedrigeres Temperaturniveau gekühlt werden.

### Bezugszeichenliste

- AU: Außenluftvolumenstrom
- AB: Abluftvolumenstrom
- LWT1: zweiter Wärmeaustauscher, Lamellenwärmeaustauscher Abluft
- LWT2: erster Wärmeaustauscher, Lamellenwärmeaustauscher Zuluft
- LWT3: Lamellenwärmeaustauscher Abluft
- LWT2-1: zweiter Wärmeaustauscher, Lamellenwärmeaustauscher Abluft
- LWT2-2: erster Wärmeaustauscher, Lamellenwärmeaustauscher Zuluft
- LWT2-5: dritter Wärmeaustauscher, Lamellenwärmeaustauscher Abluft
- LWT4-1: Lamellenwärmeaustauscher Abluft
- LWT4-2: Lamellenwärmeaustauscher Abluft
- L1-E: fünfte Leitung
- L1-A: sechste Leitung
- L3-A: obere siebte Leitung
- L3-Z: untere siebte Leitung
- L4: vierte Leitung
- L6-E: achte Leitung
- L6-A: erste Leitung
- L7: neunte Leitung
- L8: zehnte Leitung
- L9: zweite Leitung
- L10: dritte Leitung
- L11: elfte Leitung
- L2K-A: erste Leitung
- L2K-E: achte Leitung
- L2MA: dreizehnte Leitung
- L2M-E: vierzehnte Leitung
- L2V-A: sechste Leitung
- L2V-E: fünfte Leitung
- L2-1: siebte Leitung
- L2-2: fünfzehnte Leitung
- L2-3: vierte Leitung
- L2-5: zehnte Leitung
- L2-6: neunte Leitung
- L2-7: zweite Leitung
- L2-8: elfte Leitung
- L2-9: dritte Leitung
- S2: Leitung
- PO: obere zwölfte Leitung
- PU: untere zwölfte Leitung
- P2-O: obere zwölfte Leitung
- P2-U: untere zwölfte Leitung
- PWW: Wärmeaustauscher zur Einbringung externer Energie z.B. mit Pumpenwarmwasser
- PKW: Wärmeaustauscher zur Einbringung externer Energie z.B. mit Pumpenkaltwasser
- V1: drittes Dreiwege-Ventil
- V2-1: drittes Dreiwege-Ventil
- V2-2: viertes Dreiwege-Ventil
- V2-3: Dreiwege-Ventil
- V2-4: Ventil
- V2-5: erstes Dreiwege-Ventil
- V2-6: zweites Dreiwege-Ventil
- V4: Ventil
- V4-G: Ventilgruppe
- V5: erstes Dreiwege-Ventil
- V6: zweites Dreiwege-Ventil
- V7: Ventil
- V8: Ventil
- V9: Ventil
- WP: Wärmepumpe mit integriertem Hydraulikmodul einschließlich Umwälzpumpen und Pufferspeicher und Umschaltventilen für den reversiblen Betrieb
- eK: Optionaler Rückkühler zur Übertragung von überschüssiger Energie an die Außenluft
- P1: Umwälzpumpe
- P2: Hauptumwälzpumpe
- P1-1: Pufferspeicher, z.B. Pufferung der Energie als Schichtenspeicher
- P1-2: Pufferspeicher
- P2-1: Externer Speicher zur Pufferung der Energie als Schichtenspeicher
- P2-2: Externer Speicherbehälter
- Stufe 1: Regeneratives oder rekuperatives Wärmerückgewinnungssytem
- RLG 1: Raumluftgerät 1
- RLG 2: Raumluftgerät 2
- 1.Stufe 4-1: Kreislaufverbundsystem
- 1.Stufe 4-2: Kreislaufverbundsystem
- FO: Fortluft
- ZU: Zuluft

## Patentansprüche

1. Kreislaufverbundsystem aus wenigstens zwei mit einander in Verbindung stehenden Wärmeaustauschern, wobei wenigstens je ein erster Wärmeaustauscher (LWT2, LWT2-2) in einem Zuluftvolumenstrom (AU) und je ein zweiter Wärmeaustauscher (LWT1, LWT2-1) in einem Abluftvolumenstrom (AB) eines Luftbehandlungssystems angeordnet ist, mit einem Pufferspeicher (Puffer, P2-1), der mit dem Kreislaufverbundsystem verbunden ist, und mit einer Wärmepumpe (WP), in der ein Verdampfer und ein Verflüssiger mit Wärmeträger durchströmt werden,
**dadurch gekennzeichnet,**
**dass** der Pufferspeicher (Puffer; P2-1) mit der Wärmepumpe (WP) über eine erste Leitung (L6-A) und ein erstes Dreiwegeventil (V5, V2-5), und ausgehend von dem ersten Dreiwege-Ventil (V5, V2-5) über eine zweite Leitung (L9; L2-7) und eine untere zwölfte Leitung (PU, P2-U), sowie eine elfte Leitung (L11, L2-8) und eine obere zwölfte Leitung (PO, P2-O) verbunden ist und dass der Pufferspeicher (Puffer; P2-1) ausgehend von der oberen zwölften Leitung (PO, P2-O) und der zweiten Leitung (L9; L2-7) über ein zweites Dreiwege-Ventil (V6, V2-6) und eine dritte Leitung (L10; L2-9) mit dem Wärmeträgerkreislauf durch die ersten (LWT2, LWT2-2) und zweiten Wärmeaustauscher (LWT1, LWT2-1) verbunden ist,
und **dass** die Wärmepumpe (WP) in den Wärmeträgerkreislauf durch das Kreislaufverbundsystem integriert ist, in welchem enthalten sind
eine erste Leitung (L6-A; L2K-A), die zweite Leitung (L9; L2-7), die dritte Leitung (L10; L2-9), eine vierte Leitung (L4; L2-3), eine fünfte Leitung (L1-E; L2V-E), eine sechste Leitung (L1-A; L2V-A), eine obere siebte Leitung (L3-A, L2-1), eine untere siebte Leitung (L3-Z; L2-1), eine achte Leitung (L6-E; L2K-E), eine neunte Leitung (L7, L2-6), eine zehnte Leitung (L8; L2-5), die elfte Leitung (L11, L2-8), die obere zwölfte Leitung (PO, P2-O), die untere zwölfte Leitung (PU; P2-U), ein erstes Dreiwegeventil (V5, V2-5), das zweite Dreiwegeventil (V6, V2-6), ein drittes Dreiwege-Ventil (V1; V2-1), ein Ventil (V4, V2-4), der erste Wärmeaustauscher (LWT2; LWT2-2) und der zweite Wärmeaustauscher (LWT1; LWT2-1),
wobei wahlweise bei ausgeschaltetem Verdichter ohne Einsatz der Wärmepumpe (WP) der Wärmeträger von einer Pumpe, wie einer Förderpumpe der Wärmepumpe (WP), im Hydraulikkreis gefördert wird und Rohrleitungen und Ventile des Systems in folgender Reihenfolge durchströmt: über die erste Leitung (L6-A; L2K-A), das erste Dreiwegeventil (V5, V2-5, V2-2), die zweite Leitung (L9; L2-7), das zweite Dreiwegeventil (V6, V2-6), die dritte Leitung (L10; L2-9), den ersten Wärmeaustauscher (LWT2;LWT2-2), die vierte Leitung (L4; L2-3), das dritte Dreiwege-Ventil (V1; V2-1), über die fünfte Leitung (L1-E, L2V-E), die Wärmepumpe (WP), die sechste Leitung (L 1-A; L2V-A), den zweiten Wärmeaustauscher (LWT1; LWT2-1), über die obere siebte Leitung (L3-A, L2-1), die untere siebte Leitung (L3-Z, L2-1) und die achte Leitung (L6-E; L2K-E) wieder zurück in die Wärmepumpe (WP) oder wobei bei eingeschaltetem Verdichter und leerem Pufferspeicher (P1-1) beim Einschalten der Wärmepumpe (WP) im Heizfall der den Verdampfer durchströmende Wärmeträger die Rohrleitungen und Ventile wie folgt durchströmt: die sechste Leitung (L 1-A; L2V-A), den zweiten Wärmeaustauscher (LWT1; LWT2-1), die siebte Leitung (L3-A; L2-1), die neunte Leitung (L7, L2-6), das dritte Dreiwege-Ventil (V1; V2-1) und über die fünfte Leitung (L 1-E; L2V-E) wieder in die Wärmepumpe (WP), wobei weiterhin der den Verflüssiger der Wärmepumpe (WP) durchströmende Wärmeträger anschließend die erste Leitung (L6-A; L2K-A), das erste Dreiwegeventil (V5, V2-5, V2-2), die zweite Leitung (L9, L2-7), das zweite Dreiwegeventil (V6, V2-6), die dritte Leitung (L10; L2-9), den ersten Wärmeaustauscher (LWT2; LWT2-2), die vierte Leitung (L4; L2-3), die zehnte Leitung (L8; L2-5), das Ventil (V4, V2-4), die untere siebte Leitung (L3-Z; L2-1) und über die achte Leitung (L6-E; L2K-E) wieder in die Wärmepumpe (WP).

2. Kreislaufverbundsystem nach Anspruch 1,
**dadurch gekennzeichnet, dass** es bestehend aus jeweils mehreren Wärmeaustauschern (LWT2-1, LWT2-2) im Zuluftvolumenstrom (AU) und im Abluftvolumenstrom (AB) des Luftbehandlungssystems ausgebildet ist, wobei die Wärmeaustauscher (LWT2-1, LWT2-2), paarweise parallel oder in der Anordnung im Zuluft- (AU) bzw. Abluftvolumenstrom (AB) in Reihe geschaltet sind.

3. Kreislaufverbundsystem aus wenigstens zwei mit einander in Verbindung stehenden Wärmeaustauschern, wobei wenigstens je ein erster Wärmeaustauscher (LWT2, LWT2-2) in einem Zuluftvolumenstrom (AU) und je ein zweiter Wärmeaustauscher (LWT1, LWT2-1) in einem Abluftvolumenstrom (AB) eines Luftbehandlungssystems angeordnet ist, mit einer Wärmepumpe (WP), in der ein Verdampfer und ein Verflüssiger mit Wärmeträger durchströmt werden,
**dadurch gekennzeichnet,**
**dass** der Wärmepumpe (WP) ein Hydraulikmodul mit einer ersten Umwälzpumpe und einem Pufferspeicher zugeordnet ist,
wobei das Kreislaufverbundsystem aufweist:
eine erste Leitung (L2K-A), eine vierte Leitung (L2-3), eine siebte Leitung (L2-1), eine achte Leitung (L2K-E), eine neunte Leitung (L7), eine dreizehnte Leitung (L2MA), eine vierzehnte Leitung (L2M-E), eine fünfzehnte Leitung (L2-2), ein drittes Dreiwege-Ventil (V2-1), ein viertes Dreiwege-Ventil (V2-2), den ersten Wärmeaustauscher (LWT2-2), den zweiten Wärmeaustauscher (LWT2-1) und einen dritten Wärmeaustauscher (LWT2-5),
wobei der Wärmeträger wie folgt geleitet wird
durch den ersten Wärmeaustauscher (LWT2-2), die vierte Leitung (L2-3), das Dreiwege-Ventil (V2-1), den zweiten Wärmeaustauscher (LWT2-1), die siebte Leitung (L2-1) zurück in den ersten Wärmeaustauscher (LWT2-2), wobei mit der achten Leitung (L2K-E) ein Teilstrom aus der siebten Leitung (L2-1) entnommen und über das vierte Dreiwege-Ventil (V2-2) mit der im Hydraulikmodul der Wärmepumpe (WP) enthaltenen ersten Umwälzpumpe im Heizfall zum Verflüssiger bzw. im Kühlfall zum Verdampfer durch den Pufferspeicher des Hydraulikmoduls gefördert wird und über die erste Leitung (L2K-A) in die siebte Leitung (L2-1) strömt, wobei zuvor wieder ein Teilstrom über die fünfzehnte Leitung (L2-2) entnommen und über das Dreiwege-Ventil (V2-2) und die achte Leitung (L2K-E) dem Verflüssiger bzw. Verdampfer zugeführt wird,
und **dass** zusätzlich je ein im Zu- (AU) und/oder Abluftvolumenstrom (AB), dem Kreislaufverbundsystem nachgeschalteter Lamellenwärmeaustauscher (LWT2-5) vorgesehen ist, in dem die Energie über eine dreizehnte Leitung (L2MA) und eine vierzehnte Leitung (L2M-E) im Kühlfall von der Wärmepumpe (WP) in den Zu- (AU) und/oder Abluftvolumenstrom (AB) übertragen oder im Heizfall zusätzlich dem Abluftvolumenstrom (AB) von der Wärmepumpe (WP) entzogen wird.

4. Kreislaufverbundsystem nach Anspruch 1 bis 3, **dadurch gekennzeichnet, dass** ein zusätzlicher Rückkühler (eK) außerhalb der Luftbehandlungseinheiten vorgesehen ist, mit welchem im Kühlfall zusätzlich Energie an den Außenluftvolumenstrom (AU) übertragbar und welcher direkt oder indirekt parallel oder in Reihe geschaltet ist.

5. Kreislaufverbundsystem nach Anspruch 1 bis 4, **dadurch gekennzeichnet, dass** es für verschiedene Luftbehandlungsanlagen mit gleich- oder unterschiedlich großen Luftvolumenströmen (AU, AB) bestehend aus einem oder mehreren Kreislaufverbundsystemen ausgebildet ist.

6. Verfahren zum Betrieb eines Kreislaufverbundsystems nach Anspruch 3 mit je einem oder mehreren ersten Wärmeaustauschern (LWT2-1, LWT2-2) in einem Zuluftvolumenstrom (AU) und zweiten Wärmeaustauschern (LWT1, LWT2) in einem Abluftvolumenstrom (AB) und mit einer integrierten Wärmepumpe (WP), in der ein Verdampfer und ein Verflüssiger mit Wärmeträger durchströmt werden ,
**dadurch gekennzeichnet,**
**dass** der Volumenstrom des Wärmeträgers in einer zu einem ersten Wärmeaustauscher (LWT2-2) führenden siebten Leitung (L2-1) mittels eines vierten Dreiwege-Ventils (V2-2) in mindestens zwei Volumenströme aufgeteilt wird, damit der Wärmeaustauscher (wie der Verdampfer oder Verflüssiger) der Wärmepumpe (WP) mit einem größeren oder kleineren Volumenstrom als der erste Wärmeaustauscher (LWT2-2) in dem Zuluftvolumenstrom (AU) durchströmt wird,
wobei in dem Kreislaufverbundsystem enthalten sind
eine erste Leitung (L2K-A), eine vierte Leitung (L2-3), eine siebte Leitung (L2-1), eine achte Leitung (L2K-E), eine neunte Leitung (L7), eine dreizehnte Leitung (L2MA), eine vierzehnte Leitung (L2M-E), eine fünfzehnte Leitung (L2-2), ein drittes Dreiwege-Ventil (V2-1), ein viertes Dreiwege-Ventil (V2-2), der erste Wärmeaustauscher (LWT2-2), der zweite Wärmeaustauscher (LWT2-1) und ein dritter Wärmeaustauscher (LWT2-5),
wobei der Wärmeträger wie folgt geleitet wird
durch den ersten Wärmeaustauscher (LWT2-2), die vierte Leitung (L2-3), das Dreiwege-Ventil (V2-1), den zweiten Wärmeaustauscher (LWT2-1), die siebte Leitung (L2-1) zurück in den ersten Wärmeaustauscher (LWT2-2), wobei mit der achten Leitung (L2K-E) ein Teilstrom aus der siebten Leitung (L2-1) entnommen und über das vierte Dreiwege-Ventil (V2-2) mit einer im Hydraulikmodul der Wärmepumpe (WP) enthaltenen ersten Umwälzpumpe im Heizfall zum Verflüssiger bzw. im Kühlfall zum Verdampfer durch einen Pufferspeicher des Hydraulikmoduls gefördert wird und über die erste Leitung (L2K-A) in die siebte Leitung (L2-1) strömt, wobei zuvor wieder ein Teilstrom über die fünfzehnte Leitung (L2-2) entnommen und über das Dreiwege-Ventil (V2-2) und die achte Leitung (L2K-E) dem Verflüssiger bzw. Verdampfer zugeführt wird
und wobei zur Übertragung der Energie der Wärmepumpe (WP) an den Abluftvolumenstrom (AB) eine im Hydraulikmodul der Wärmepumpe (WP) enthaltene zweite Umwälzpumpe den Wärmeträger durch die dreizehnte Leitung (L2M-A), den Wärmeaustauscher (LWT2-5) und die vierzehnte Leitung (L2M-E) zurück zur Wärmepumpe (WP) fördert.

7. Verfahren nach Anspruch 6, **dadurch gekennzeichnet, dass** der Wärmeaustauscher (Verflüssiger) der Wärmepumpe (WP) mit einem größeren oder kleineren Volumenstrom als der Wärmeaustauscher (LWT2-1, LWT2-2) in dem Abluftvolumenstrom (AB) durchströmt wird.

8. Verfahren nach Anspruch 6, **dadurch gekennzeichnet, dass** ein Wärmeaustauscher (Kombi-Verflüssiger / Verdampfer) einer auf der Kälteseite umschaltbaren Wärmepumpe (WP) mit einem größeren oder kleineren Volumenstrom als der Wärmeaustauscher (LWT2-1, LWT2-2) in dem Zuluftvolumenstrom (AU) durchströmt wird.

9. Verfahren nach Anspruch 6, **dadurch gekennzeichnet, dass** ein in Verbindung mit dem Zuluftvolumenstrom (AU) aktiver Wärmeaustauscher, Verflüssiger oder Verdampfer einer auf der Hydraulikseite umschaltbaren Wärmepumpe (WP) mit einem größeren oder kleineren Volumenstrom als der Wärmeaustauscher (LWT2-1, LWT2-2) in dem Zuluftvolumenstrom (AU) durchströmt wird.

## Claims

1. Circulation compound system comprising at least two associated heat exchangers, wherein at least one respective first heat exchanger (LWT2, LWT2-2) is arranged in a supply air volume flow (AU) and a respective second heat exchanger (LWT1, LWT2-1) is arranged in an exhaust air volume flow (AB) of an air treatment system, with a buffer reservoir (buffer, P2-1), which is connected to the circulation compound system, and with a heat pump (WP), in which a heat carrier flows through an evaporator and a condenser,
**characterized,**
**in that** the buffer reservoir (buffer P2-1) is connected with the heat pump (WP) via a first pipe (L6-A) and a first three-way valve (V5, V2-5), and starting from the first three-way valve (V5, V2- 5) via a second pipe (L9; L2-7) and a lower twelfth pipe (PU, P2-U), and an eleventh pipe (L 11, L2-8) and an upper twelfth pipe (PO, P2-O), and that the buffer reservoir (buffer; P2-1) is connected via a second three-way valve (V6, V2-6) from the upper twelfth pipe (PO, P2-O) and the second pipe (L9; L2-7). and a third pipe (L10, L2-9) to the heat carrier circuit through the first (LWT2, LWT2-2) and second heat exchangers (LWT1, LWT2-1),
and that the heat pump (WP) is integrated in the heat carrier circuit running through the circulation compound system, in which are included a first pipe (L6-A; L2K-A), the second pipe (L9; L2-7), the third pipe (L10; L2-9), a fourth pipe (L4; L2-3), a fifth pipe (L1-E; L2V-E), a sixth pipe (L1-A, L2V-A), an upper seventh pipe (L3-A, L2-1), a lower seventh pipe (L3-Z; L2-1), an eighth pipe (L6-E, L2K-E), a ninth pipe (L7, L2-6), a tenth pipe (L8; L2-5), the eleventh pipe (L11, L2-8), the upper twelfth pipe (PO, P2-O), the lower twelfth pipe (PU; P2-U), a first three-way valve (V5, V2-5), the second three-way valve (V6, V2-6), a third three-way Valve (V1, V2-1), a valve (V4, V2-4), the first heat exchanger (LWT2; LWT2-2) and the second heat exchanger (LWT1; LWT2-1),
whereby optionally with the compressor switched off without the use of the heat pump (WP), the heat carrier is conveyed by a pump, such as a feed pump of the heat pump (WP), in the hydraulic circuit and is flowing through the pipes and valves of the system in the following order:
via the first pipe (L6-A; L2K-A), the first three-way valve (V5, V2-5, V2-2), the second pipe (L9; L2-7), the second three-way valve (V6, V2-6), the third pipe (L10; L2-9), the first heat exchanger (LWT2; LWT2-2), the fourth pipe (L4; L2-3), the third three-way valve (V1; V2-1), via the fifth pipe (L1-E, L2V-E), the heat pump (WP), the sixth pipe (L1-A, L2V-A), the second heat exchanger (LWT1, LWT2-1) via the upper seventh pipe (L3-A , L2-1), the lower seventh pipe (L3-Z, L2-1) and the eighth pipe (L6-E; L2K-E) back into the heat pump (WP)
or when the compressor is switched on and with an empty buffer reservoir (P1-1) when switching on the heat pump (WP) in the heating case, the heat carrier which flows through the evaporator is flowing through the pipes and
valves as follows:
the sixth pipe (L1-A; L2V-A), the second heat exchanger (LWT1; LWT2-1), the seventh pipe (L3-A; L2-1), the ninth pipe (L7, L2-6), the third three-way valve (V1, V2-1) and the fifth pipe (L1-E, L2V-E) back into the heat pump (WP), wherein further the heat carrier medium flows through the condenser of the heat pump (WP) then the first pipe (L6 -A; L2K-A), the first three-way valve (V5, V2-5, V2-2), the second pipe (L9, L2-7), the second three-way valve (V6, V2-6), the third pipe (L10 L2-9), the first heat exchanger (LWT2; LWT2-2), the fourth pipe (L4; L2-3), the tenth pipe (L8; L2-5), the valve (V4, V2-4),the lower seventh pipe (L3-Z; L2-1) and via the eighth pipe (L6-E; L2K-E) back into the heat pump (WP).

2. Circulation compound system according to claim 1,
**characterized in that** it is formed consisting of a plurality of heat exchangers (LWT2-1, LWT2-2) each in the supply air volume flow (AU) and in the exhaust air volume flow (AB) of the air treatment system, wherein the heat exchangers (LWT2-1, LWT2-2) are arranged in pairs in parallel or are connected in series in an arrangement of the supply air volume flow (AU) or exhaust air volume flow (AB).

3. Circulation compound system comprising at least two associated heat exchangers, wherein at least one respective first heat exchanger (LWT2, LWT2-2) is arranged in a supply air volume flow (AU) and a respective second heat exchanger (LWT1, LWT2-1) is arranged in an exhaust air volume flow (AB) an air treatment system, with a heat pump (WP), in which a heat carrier flows through an evaporator and a condenser,
**characterized,**
**in that** the heat pump (WP) is assigned a hydraulic module with a first circulating pump and a buffer reservoir, and where the circulation compound system comprises:
a first pipe (L2K-A), a fourth pipe (L2-3), a seventh pipe (L2-1), an eighth pipe (L2K-E), a ninth pipe (L7), a thirteenth pipe (L2MA), a fourteenth pipe (L2M-E), a fifteenth pipe (L2-2), a third three-way valve (V2-1), a fourth three-way valve (V2-2), the first heat exchanger (LWT2-2), the second heat exchanger (LWT2-1) and a third heat exchanger (LWT2-5),
wherein the heat carrier medium is guided as follows through the first heat exchanger (LWT2-2), the fourth pipe (L2-3), the three-way valve (V2-1), the second heat exchanger (LWT2-1), the seventh pipe (L2-1) back to the first heat exchanger (LWT2-2), where by the eighth pipe (L2K-E) a partial flow is taken from the seventh pipe (L2-1) and conveyed via the fourth three-way valve (V2-2) with a circulation pump contained in the hydraulic module of the heat pump (WP) in a heating case to the condenser or, in the case of cooling to the evaporator through the buffer reservoir of the hydraulic module and flows via the first pipe (L2K-A) into the seventh pipe (L2-1), where previously again a partial flow is removed via the fifteenth pipe (L2-2) and fed via the three-way valve (V2-2) and the eighth pipe (L2K-E) to the condenser or evaporator,
and that additionally in each case in the supply (AU) and / or exhaust air volume flow (AB), downstream of the circulation compound system a lamellar heat exchanger (LWT2-5) is provided in which the energy is transferred over a thirteenth pipe (L2MA) and a fourteenth pipe (L2M-E) in the case of cooling, transferred by the heat pump (WP) to the supply (AU) and / or exhaust air volume flow (AB) or, in the case of heating, additionally withdrawn from the exhaust air volume flow (AB) by the heat pump (WP).

4. Circulation compound system according to claim 1 to 3,
**characterized in that** an additional re-cooler (eK) is provided outside the air treatment units, with which in the case of cooling additionally energy is transferable to the exhaust air volume flow (AU) and which is connected directly or indirectly in parallel or in series.

5. Circulation compound system according to claim 1 to 4,
**characterized in that** it is designed for different air treatment plants with equal or different sized air volume flows (AU, AB) consisting of one or more circulating compound systems.

6. Method for operating a circulation compound system according to claim 3, each having one or more first heat exchangers (LWT2-1, LWT2-2) in a supply air volume (AU) and second heat exchangers (LWT1, LWT2) in an exhaust air volume flow (AB) and with an integrated heat pump (WP in which a heat carrier flows through an evaporator and a condenser,
**characterized,**
**in that** the volume flow of the heat carrier in a seventh pipe (L2-1) leading to a first heat exchanger (LWT2-2) is divided into at least two volume flows by means of a fourth three-way valve (V2-2), so that the heat exchanger (such as the evaporator or condenser) of the heat pump (WP) is passed by a larger or smaller volume flow than the first heat exchanger (LWT2-2) in the supply air volume flow (AU),
where in the circulation compound system are included a first pipe (L2K-A), a fourth pipe (L2-3), a seventh pipe (L2-1), an eighth pipe (L2K-E), a ninth pipe (L7), a thirteenth pipe (L2MA), a fourteenth pipe (L2M-E), a fifteenth pipe (L2-2), a third three-way valve (V2-1), a fourth three-way valve (V2-2), the first heat exchanger (LWT2-2), the second heat exchanger (LWT2-1) and a third heat exchanger (LWT2-5),
wherein the heat carrier medium is guided as follows through the first heat exchanger (LWT2-2), the fourth pipe (L2-3), the three-way valve (V2-1), the second heat exchanger (LWT2-1), the seventh pipe (L2-1) back to the first heat exchanger (LWT2-2), where with the eighth pipe (L2K-E) a partial flow is removed from the seventh pipe (L2-1) and conveyed via the fourth three-way valve (V2-2) with a circulating pump in the hydraulic module of the heat pump (WP) in the heating case to the condenser or in the cooling case to the evaporator through a buffer reservoir of the hydraulic module and flows via the first pipe (L2K-A) in the seventh pipe (L2-1), wherein previously again a partial flow is removed through the fifteenth pipe (L2-2) and is supplied via the three-way valve (V2-2) and the eighth pipe (L2K-E) to the condenser or evaporator
and wherein for transmitting the energy of the heat pump (WP) to the exhaust air volume flow (AB) a second circulating pump contained in the hydraulic module of the heat pump (WP) conveys the heat carrier through the thirteenth pipe (L2M-A), the heat exchanger (LWT2-5) and the fourteenth pipe (L2M-E) back to the heat pump (WP).

7. Method according to claim 6,
**characterized in that** the heat exchanger (condenser) of the heat pump (WP) is flowed through with a larger or smaller volume flow than the heat exchanger (LWT2-1, LWT2-2) in the exhaust air volume flow (AB).

8. Method according to claim 6,
**characterized in that** a heat exchanger (combination condenser / evaporator) of a heat pump (WP) switchable on the cold side is flowed through with a larger or smaller volume flow than the heat exchanger (LWT2-1, LWT2-2) in the supply air flow (AU).

9. Method according to claim 6,
**characterized in that** a heat exchanger, condenser or evaporator active in connection with the supply air volume flow (AU) of a heat pump (WP) switchable on the hydraulic side is flowed through with a larger or smaller volume flow than the heat exchanger (LWT2-1, LWT2-2) in the supply air flow (AU).

## Revendications

1. Système composite de circuit comprenant au moins deux échangeurs de chaleur associés, dans lequel au moins un premier échangeur de chaleur respectif (LWT2, LWT2-2) est arrangé dans un flux de volume d'air extérieur (AU) et un deuxième échangeur de chaleur respectif (LWT1, LWT2-1) est arrangé dans un flux de volume d'air extrait (AB) dans un système de traitement de l'air, avec un réservoir buffer (buffer P2-1) connectée au un système composite du circuit et avec une pompe à chaleur (WP) dans laquelle un évaporateur et un condenseur sont traversée par un fluide caloporteur,
caractérisé en
que le réservoir buffer (tampon P2-1) est connectée avec la pompe à chaleur (WP) via un premier tuyau (L6-A) et une première valve à trois voies (V5, V2-5), et à partir de la première valve à trois voies (V5, V2- 5) via un deuxième tuyau (L9; L2-7) et un douzième tuyau inférieure (PU, P2-U), un onzième tuyau (L 11, L2-8) et un douzième tuyau supérieure (PO, P2-O) et en ce que le réservoir buffer (buffer; P2-1) est connectée via une deuxième valve à trois voies (V6, V2-6) à partir du douzième tuyau supérieur (PO, P2-O) et du deuxième tuyau (L9; L2-7), et un troisième tuyau (L10, L2-9) est connectée au circuit du fluide caloporteur par l'intermédiaire des premier (LWT2, LWT2-2) et deuxième échangeurs de chaleur (LWT1, LWT2-1),
et que la pompe à chaleur (WP) est intégrée dans le circuit de transfert de chaleur par le système composite à circulation, comprenant
un premier tuyau (L6-A; L2K-A), le deuxième tuyau (L9; L2-7), la troisième tuyau (L10; L2-9), un quatrième tuyau (L4; L2-3), un cinquième tuyau (L1-E; L2V-E), un sixième tuyau (L1-A, L2V-A), un septième tuyau supérieure (L3-A, L2-1), un septième tuyau inférieure (L3-Z; L2-1), un huitième tuyau (L6-E, L2K-E), un neuvième tuyau (L7, L2-6), un dixième tuyau (L8; L2-5), le onzième tuyau (L11, L2-8), le douzième tuyau supérieur (PO, P2-O), le douzième tuyau inférieur (PU; P2-U), une première valve à trois voies (V5, V2-5), la deuxième valve à trois voies (V6, V2-6), une troisième valve (V1, V2-1), une valve (V4, V2-4), le premier échangeur thermique (LWT2; LWT2-2) et le deuxième échangeur de chaleur (LWT1; LWT2-1),
éventuellement avec le compresseur éteint sans l'utilisation de la pompe à chaleur (WP), le caloporteur provenant d'une pompe, telle qu'une pompe d'alimentation de la pompe à chaleur (WP), est acheminé dans le circuit hydraulique et circule dans le tuyau et les valves du système dans l'ordre suivant:
via le premier tuyau (L6-A; L2K-A), la première valve à trois voies (V5, V2-5, V2-2), le deuxième tuyau (L9; L2-7), la deuxième valve à trois voies (V6, V2-6), le troisième tuyau (L10; L2-9), le premier échangeur de chaleur (LWT2; LWT2-2), le quatrième tuyau (L4; L2-3), la troisième valve à trois voies (V1; V2-1), via le cinquième tuyau (L1-E, L2V-E), la pompe à chaleur (WP), le sixième tuyau (L1-A, L2V-A), le deuxième échangeur de chaleur (LWT1, LWT2-1) via le septième tuyau supérieure (L3-A, L2-1), le septième tuyau inférieure (L3-Z, L2-1) et le huitième tuyau (L6-E; L2K-E) de nouveau dans la pompe à chaleur (WP) ou lorsque le compresseur est allumé et le réservoir buffer (P1-1) vide lorsque la pompe à chaleur (WP) est en marche, dans le boîtier de chauffage, le fluide caloporteur circulant dans l'évaporateur s'écoule de la manière suivante:
le sixième tuyau (L1-A; L2V-A), le deuxième échangeur de chaleur (LWT1; LWT2-1), le septième tuyau (L3-A; L2-1), le neuvième tuyau (L7, L2-6), la troisième valve à trois voies (V1, V2-1) et le cinquième tuyau (L1-E, L2V-E) reviennent dans la pompe à chaleur (WP), le fluide caloporteur circulant en outre dans le condenseur de la pompe à chaleur (WP), puis le premier tuyau (L6). -A; L2K-A), la première valve à trois voies (V5, V2-5, V2-2), le deuxième tuyau (L9, L2-7), la deuxième valve à trois voies (V6, V2-6), le troisième tuyau (L10 L2-9), le premier échangeur de chaleur (LWT2; LWT2-2), le quatrième tuyau (L4; L2-3), le dixième tuyau (L8; L2-5), la valve (V4, V2-4), le septième tuyau inférieure (L3-Z; L2-1) et via le huitième tuyau (L6-E; L2K-E) de nouveau dans la pompe à chaleur (WP).

2. Système composite de circuit selon la revendication 1,
**caractérisé en ce qu'**il est formé en une pluralité d'échangeurs de chaleur (LWT2-1, LWT2-2) en un flux de volume d'air extérieur (AU) et dans le flux d'air extrait (AB) du système de traitement d'air, cependant l'échangeur de chaleur (LWT2-1, LWT2-2), sont connectés par paires en parallèle ou sont connectés dans la configuration en le flux d'air extérieur (AU) ou le flux d'air extrait (AB) en série.

3. Système composite de circuit comprenant au moins deux échangeurs de chaleur associés, dans lequel au moins un premier échangeur de chaleur respectif (LWT2, LWT2-2) est arrangé dans un flux de volume d'air extérieur (AU) et un deuxième échangeur de chaleur respectif (LWT1, LWT2-1) est arrangé dans un flux de volume d'air extrait (AB) dans un système de traitement de l'air, avec une pompe à chaleur (WP), dans lequel un évaporateur et un condenseur sont traversée par un fluide caloporteur,
**caractérisé**
**en ce qu'**à la pompe à chaleur (WP) est associé un module hydraulique avec une première pompe de circulation et un réservoir buffer,
cependant le système de circulation comprenant:
un premier tuyau (L2K-A), un quatrième tuyau (L2-3), un septième tuyau (L2-1), un huitième tuyau (L2K-E), un neuvième tuyau (L7), un treizième tuyau (L2MA), un quatorzième tuyau (L2M-E), un quinzième tuyau (L2-2), une troisième valve à trois voies (V2-1), une quatrième valve à trois voies (V2-2), le premier échangeur de chaleur (LWT2-2), le deuxième échangeur de chaleur (LWT2-1) et un troisième échangeur de chaleur (LWT2-5),
dans lequel le fluide caloporteur est passé comme suit
à travers le premier échangeur de chaleur (LWT2-2), le quatrième tuyau (L2-3), la valve à trois voies (V2-1), le deuxième échangeur de chaleur (LWT2-1), la septième tuyau (L2-1) jusqu'au premier échangeur de chaleur (LWT2-2),
cependant avec la huitième tuyau (L2K-E), flux partiel de la septième tuyau (L2-1) prise et via la quatrième valve à trois voies (V2-2) avec de la pompe à chaleur (WP) dans le module hydraulique en cas de chauffage dans le condenseur ou, en cas de refroidissement dans l'évaporateur, est acheminé à travers le réservoir buffer du module hydraulique et passe par le premier tuyau (L2K-A) dans la septième tuyau (L2-1),
cependant précédemment encore un flux partiel enlevé via le quinzième conduit (L2-2) et alimenté par la valve à trois voies (V2-2) et le huitième conduit (L2K-E) vers le condenseur ou l'évaporateur,
et en surplus que dans chaque cas dans le flux de volume d'air extérieur (AU) et / ou flux de volume d'air extrait (AB), un échangeur lamellaire (LWT2-5) en aval du système composite de circuit est prévu dans lequel l'énergie sur un treizième tuyau (L2MA) et un quatorzième tuyau (L2M-E) en cas de refroidissement,
transfert de la pompe à chaleur (WP) vers le flux de volume d'air extérieur (AU) et / ou le flux de volume d'air extrait (AB) ou, en cas de chauffage, retirer l'énergie en plus du flux volumétrique flux de volume d'air extrait (AB) avec la pompe à chaleur (WP).

4. Système composite de circuit selon les revendications 1 à 3,
**caractérisé en ce qu'**un refroidisseur supplémentaire (eK) est prévu à l'extérieur des unités de traitement de l'air, avec lequel, dans le cas du refroidissement, de l'énergie supplémentaire peut être transférée au flux d'air extérieur (AU) et qui est raccordé directement ou indirectement en parallèle ou en série.

5. Système composite de circuit selon les revendications 1 à 4,
**caractérisé en ce qu'**il est conçu pour différentes installations de traitement de l'air avec des flux de volume d'air (AU, AB) égaux ou différents consistant en un ou plusieurs systèmes composites en circulation.

6. Procédé de fonctionnement d'un système composite de circuit selon la revendication 3, comportant chacun un ou plusieurs premiers échangeurs de chaleur (LWT2-1, LWT2-2) dans un flux de volume d'air extérieur (AU) et des deuxièmes échangeurs de chaleur (LWT1, LWT2) dans un flux de volume d'air extrait (AB) et avec un pompe à chaleur (WP), dans laquelle un évaporateur et un condenseur traversent avec fluide caloporteur,
**caractérisé en**
**ce que** le flux volumétrique du fluide caloporteur dans un septième tuyau (L2-1) conduisant à un premier échangeur de chaleur (LWT2-2) est divisé en au moins deux flux de volume au moyen d'une quatrième valve à trois voies (V2-2), de sorte que l'échangeur de chaleur (tel que l'évaporateur ou le condenseur) de la pompe à chaleur (WP) est traversé avec un flux volumique plus grand ou plus petit que celui du premier échangeur de chaleur (LWT2-2) dans le flux en volume d'air extérieur (AU),
étant inclus dans le système composite de circuit
un premier tuyau (L2K-A), un quatrième tuyau (L2-3), un septième tuyau (L2-1), un huitième tuyau (L2K-E), un neuvième tuyau (L7), un treizième tuyau (L2MA), un quatorzième tuyau (L2M-E), un quinzième tuyau (L2-2), une troisième valve à trois voies (V2-1), une quatrième valve à trois voies (V2-2), le premier échangeur de chaleur (LWT2-2), le deuxième échangeur de chaleur (LWT2-1) et un troisième échangeur de chaleur (LWT2-5),
dans lequel le fluide caloporteur est passé comme suit
à travers le premier échangeur de chaleur (LWT2-2), le quatrième tuyau (L2-3), la valve à trois voies (V2-1), le deuxième échangeur de chaleur (LWT2-1), le septième tuyau (L2-1) jusqu'au premier échangeur de chaleur (LWT2-2), avec le huitième tuyau (L2K-E) un flux partiel à partir de la septième tuyau (L2-1) et évacué par la quatrième valve à trois voies (V2-2) avec un pompe de circulation dans le module hydraulique de la pompe à chaleur (WP) dans le cas de chauffage vers le condenseur ou dans le cas de refroidissement vers l'évaporateur par un réservoir buffer du module hydraulique contenu et passant par le premier tuyau (L2K-A) dans la septième tuyau (L2-1), cependant dans laquelle précédemment encore un flux partiel à travers la quinzième tuyau (L2-2) et est alimenté via la valve à trois voies (V2-2) et le huitième tuyau (L2K-E) au condenseur ou à l'évaporateur et dans lequel pour transmettre l'énergie de la pompe à chaleur (WP) au flux de volume d'air extrait (AB) une deuxième pompe de circulation contenue dans le module hydraulique de la pompe à chaleur (WP) transports le fluide caloporteur à travers le treizième tuyau (L2M-A), l'échangeur de chaleur (LWT2-5) et le quatorzième tuyau (L2M-E) à la pompe à chaleur (WP).

7. Procédé selon la revendication 6,
**caractérisé en ce que** l'échangeur de chaleur (condenseur) de la pompe à chaleur (WP) est traversé avec un flux volumique supérieur ou inférieur à celui de l'échangeur de chaleur (LWT2-1, LWT2-2) dans le flux de volume d'air extrait (AB).

8. Procédé selon la revendication 6,
**caractérisé en ce qu'**un échangeur de chaleur (condenseur / évaporateur combiné) de la pompe à chaleur (WP) commutable a côté froid est traversé avec un flux volumique supérieur ou inférieur à celui de l'échangeur de chaleur (LWT2-1, LWT2-2) dans le flux de volume d'air extérieur (AU).

9. Procédé selon la revendication 6,
**caractérisé en ce que**, un échangeur de chaleur, un condenseur ou un évaporateur actif en liaison avec le flux de volume d'air extérieur (AU) et commutable sur la pompe à chaleur a la côté hydraulique (WP) est traversé par un flux volumique supérieur ou inférieur à celui de l'échangeur de chaleur (LWT2-1, LWT2-2) dans le flux de volume d'air extérieur (AU).
